# EUROPEAN PATENT APPLICATION

(11) **EP 3 786 242 A1**
(43) Date of publication of application: **03.03.2021**
(21) Application number: 19193815.8
(22) Date of filing: 27.08.2019
(51) Int. Cl.: C09D 133/08

(54) **PRESSURE-SENSITIVE ADHESIVE SHEET WITH IMPROVED WEATHERABILITY**

(71) Applicant: NITTO BELGIUM N.V, 3600 Genk (BE)
(72) Inventor: VERSTRAETEN, Kristof, 3600 Genk (BE); PINXTEN, Donald, 3600 Genk (BE); PAESEN, Bert, 3600 Genk (BE)
(74) Representative: Grünecker Patent- und Rechtsanwälte PartG mbB

(57) **Abstract**

The disclosure relates to a pressure-sensitive adhesive composition comprising: an acrylic polymer with acrylic acid functional groups; an epoxy-based crosslinking agent at a content of 3 parts per weight or more based on 100 parts per weight of the acrylic polymer; and a UV-absorber at a content of 2 parts per weight or more based on 100 parts per weight of the acrylic polymer. In addition, a surface protection sheet comprising a carrier and a pressure-sensitive adhesive layer formed of the aforementioned pressure-sensitive adhesive composition is described, as well as the use of the aforementioned surface protection sheet for outdoor surface protection. The surface protection sheet exhibits excellent weatherability resistance, adhesion properties on different substrate surfaces, oxidation resistance, advantageous anti-residue properties upon peeling and low surface contaminating properties.

## Description

### FIELD OF INVENTION

This invention relates to a pressure-sensitive adhesive composition which enables production of surface protection adhesive sheets with enhanced weatherability. In further embodiments, the present invention relates to surface protection adhesive sheets comprising said pressure-sensitive adhesive composition and to uses thereof.

### BACKGROUND OF THE INVENTION

Surface protection sheets, especially those to be used in outdoor applications, desirably fulfill a number of requirements to enable efficient long-term use, including a high resistance towards (UV) light exposure in the presence of moisture (typically referred to as weatherability), oxidation resistance, minimized peel strength increase, low amounts of adhesive residues on the adherend surface (anti-residue properties) upon peeling and low surface contaminating properties.

For this purpose, it is known in the art to combine acrylic pressure-sensitive adhesives with UV-absorbing agents and antioxidants in order to simultaneously improve the weatherability, oxidation resistance and adhesiveness (i.e. pressure-sensitive adhesive force and cohesive force) of pressure-sensitive adhesive tapes.

For example, JP 2013-249346 A teaches combining a (meth)acrylate-based polymer with a weight-average molecular weight of 50,000 or more and a UV-absorber in order to provide a self-adhesive sheet with excellent weatherability, oxidation resistance and anti-residue properties.

In addition, JP 2004-307604 A discloses a UV-resistant pressure-sensitive adhesive sheet formed by laminating together multiple films having different weather resistance properties, wherein the pressure-sensitive adhesive layer is based upon acrylic resin to which UV-absorbers and antioxidants are optionally added.

US 2013/0085215 A1 discloses an optical pressure-sensitive adhesive sheet for protection of display devices and touch panels against deterioration due to exposure to UV light. Herein, the pressure-sensitive adhesive is likewise based on the combination of an acrylic polymer and a triazine-based UV-absorber, optionally with light stabilizers.

However, despite of the addition of UV-absorbers, light stabilizers and antioxidants, the pressure-sensitive adhesive tapes disclosed in the above-cited prior art still exhibit insufficient weatherability and do not allow effective use as outdoor surface protection tapes, such that they could withstand long-term (e.g. at least one year) outside exposure on different substrates (e.g. glass or metal surfaces) without occurence of residues, staining or film tear.

In view of the above, there exists a need to provide an environmentally-friendly pressure-sensitive adhesive composition which enables simple manufacture of surface protective sheets with further improved weatherability, excellent adhesion properties on different substrates, oxidation resistance, favourable anti-residue properties upon peeling and low surface contaminating properties.

### SUMMARY OF THE INVENTION

The present invention solves these objects with the subject matter of the claims as defined herein. Further advantages of the present invention will be further explained in detail in the section below.

One aspect of the present invention relates to a pressure-sensitive adhesive composition comprising: an acrylic polymer with acrylic acid functional groups; an epoxy-based crosslinking agent at a content of 3 parts per weight or more based on 100 parts per weight of the acrylic polymer; and a UV-absorber at a content of 2 parts per weight or more based on 100 parts per weight of the acrylic polymer.

In a further aspect, the present invention relates to a surface protection sheet comprising a carrier and a pressure-sensitive adhesive layer, wherein the pressure-sensitive adhesive layer is formed of the aforementioned pressure-sensitive adhesive composition.

In another aspect, the present invention relates to the use of the aforementioned surface protection sheet for outdoor surface protection.

Preferred embodiments of the pressure-sensitive adhesive composition, the surface protection sheet and other aspects of the present invention are described in the following description and the claims.

### DETAILED DESCRIPTION OF THE INVENTION

For a more complete understanding of the present invention, reference is now made to the following description of the illustrative embodiments thereof:

### Pressure-Sensitive Adhesive Composition

In a first embodiment, the present invention relates to a pressure-sensitive adhesive composition comprising: an acrylic polymer with acrylic acid functional groups; an epoxy-based crosslinking agent at a content of 3 parts per weight or more based on 100 parts per weight of the acrylic polymer; and a UV-absorber at a content of 2 parts per weight or more based on 100 parts per weight of the acrylic polymer.

The pressure-sensitive adhesive composition includes an acrylic polymer with acrylic acid functional groups as an essential component. The acrylic polymer is a polymer formed from a component including an acrylic monomer as an essential monomer component. As the monomer component of the acrylic polymer, a copolymerizable monomer may be included.

The acrylic polymer is formed from one or two or more kinds of monomer component(s).

While not being limited thereto, the acrylic polymer preferably includes, as the monomer constituent unit, an alkyl (meth)acrylate and/or alkoxyalkyl (meth)acrylate. Among alkyl (meth)acrylates, those having a linear or branched alkyl group are preferred. As examples thereof, alkyl (meth)acrylates having a linear or branched alkyl group having 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate), pentyl (meth)acrylate, isopentyl (meth)acrylate, hexyl (meth)acrylate, heptyl (meth)acrylate, octyl (meth)acrylate, 2-ethylhexyl (meth)acrylate (2-EHA), isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, lauryl (meth)acrylate, and stearyl (meth)acrylate (MAS) may be mentioned. Alkyl (meth)acrylates having a linear or branched alkyl group having 1 to 12 carbon atoms are further preferred examples, and 2-ethylhexyl acrylate (2-EHA), n-butyl acrylate (BA) and methyl methacrylate (MMA) are especially preferable. As examples of alkoxyalkyl (meth)acrylates, 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate may be mentioned. As mentioned above, the alkyl (meth)acrylate and/or alkoxylalkyl (meth)acrylate may be used either alone or in combination of two or more thereof. While not being particularly limited, the total content of the alkyl (meth)acrylate(s) and alkoxyalkyl (meth)acrylate(s) based on the total monomer components forming the acrylic polymer is preferably 20 wt.-% or more, more preferably 40 wt.-% or more, such as 45 wt.-% or more.

The acrylic polymer may further comprise a repeating unit formed of a copolymerizable monomer, which is preferably selected from one or more of: carboxyl-group-containing monomers (e.g., (meth)acrylic acid, carboxyethyl (meth)acrylate, carboxypentyl (meth)acrylate, itaconic acid, maleic acid, fumaric acid, crotonic acid and the like); (meth)acrylic acid esters (e.g., methacrylic acid butylester (MABU) or the like), hydroxyl group-containing monomers (e.g., hydroxyl group-containing (meth)acrylic acid ester, such as 2-hydroxyethyl acrylate (2-HEA); vinyl alcohol; allyl alcohol; and the like); nitrogen atom-containing monomers (e.g., N-vinyl cyclic amide, substituted or unsubstituted (meth)acryl amides, amino group-containing monomers, heterocyclic ring-containing monomers, imide group-containing monomers, isocyanate group-containing monomers, and the like); polyfunctional monomers (e.g. alkanediol di(meth)acrylate, (poly)alkylene glycol di(meth)acrylates or tri(meth)acrylates; allyl (meth)acrylate, vinyl (meth)acrylate, divinylbenzene, epoxy-, polyester- and urethane-based acrylates and the like); epoxy group-containing monomers (e.g., glycidyl (meth)acrylate, methylglycidyl (meth)acrylate and the like); phosphate group-containing monomers; sulfonate group-containing monomers (e.g., sodium vinyl sulfonate); (meth)acrylic acid esters having an alicyclic hydrocarbon group or an aromatic hydrocarbon group (e.g. benzyl (meth)acrylate); vinyl esters (e.g. vinyl acetate); aromatic vinyl compounds; olefins or dienes; vinyl ethers; and vinyl halogenides. While not being particularly limited, the total content of the copolymerizable monomer(s) based on the total monomer components forming the acrylic polymer is preferably 50 wt.-% or less, more preferably 45 wt.-% or less, such as 25 wt.-% or less.

The acrylic polymer can be prepared by polymerizing the monomer components according to methods known in the art, including solution polymerization, emulsion polymerization, bulk polymerization and active energy-ray polymerization.

The weight average molecular weight (M_{w}) of the acrylic polymer is not particularly limited, and is typically 50,000 to 4,000,000, preferably 100,000 to 2,000,000, and more preferably 300,000 to 1,500,000.

The pressure-sensitive adhesive composition according to the present invention contains an ultraviolet absorber (UVA). While the UV-absorber is not particularly limited as long as it is capable of absorbing radiant energy in the ultraviolet region of the electromagnetic spectrum, preferred examples include UV-absorbers selected from benzophenone derivatives, benzotriazole derivatives, triazine derivatives or combinations of two or more UV-absorbers from these groups of derivatives. Among them, the ultraviolet absorber is further preferably a triazine-based ultraviolet absorber, more preferably a hydroxyl group-containing triazine ultraviolet absorber, and still more preferably a hydroxyphenyl triazine ultraviolet absorber, in terms of the ultraviolet absorbency, as well as in terms of exhibiting high reactivity in and compatibility with an acrylic polymer and of easily providing an acrylic pressure-sensitive adhesive layer having high transparency by controlling the total light transmittance and the haze of the acrylic pressure-sensitive adhesive layer.

Examples of the triazine-based ultraviolet absorber include, but not limited to, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4-diphenyl-6-(2-hydroxy-4-butoxyethoxy)-1,3,5-triazine, 2,4-bis(2-hydroxy-4-butoxyphenyl)-6-(2,4-dibutoxyphenyl)-1,3,5-triazine, 2,4,6-tris(2-hydroxy-4-methoxyphenyl)-1,3,5-triazine, 2,4,6-tris(2-hydroxy-4-etoxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-octyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-4-ethoxycarbonylethyloxyphenyl)-1,3,5-triazine, 2,4,6-tris(2-hydroxy-4-(1-(2-ethoxyhexyloxy)-1-oxopropan-2-yloxy)phenyl)-1,3,5-triazine, 2,4,6-tris(2-hydroxy-3-methyl-4-methoxyphenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-octyloxyphenyl)-1,3,5-triazine, 2,4,6-tris(2-hydroxy-3-methyl-4-dodecyloxyphenyl)-1,3,5-triazine, 2,4,6-tris(2-hydroxy-3-methyl-4-benzyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-butoxyethoxyphenyl)-1,3,5-triazine, 2,4,6-tris(2-hydroxy-3-methyl-4-propoxyethoxyphenyl)-1,3,5-triazine, 2,4,6-tris(2-hydroxy-3-methyl-4-methoxycarbonylpropyloxyphenyl)-1,3,5-triazine, 2,4,6-tris(2-hydroxy-3-methyl-4-ethoxycarbonylethyloxyphenyl)-1,3,5-triazine, and 2,4,6-tris(2-hydroxy-3-methyl-4-(1-(2-ethoxyhexyloxy)-1-oxopropan-2-yloxy)phenyl)-1,3,5-triazine.

The content of the UV-absorber in the pressure-sensitive adhesive composition is at least 2 parts by weight based on 100 parts per weight of the acrylic polymer, preferably from 2 to 10 parts by weight, from the viewpoint of effectively reducing the light transmittance at a wavelength of 380 nm. The content of 10 parts by weight or less is also preferred since the total light transmittance and haze of the acrylic pressure-sensitive adhesive layer can then be controlled, thereby easily providing an acrylic pressure-sensitive adhesive layer of high transparency. In particularly preferred embodiments, the content of the UV-absorber ranges from 3 to 10 parts by weight, still more preferably from 3 to 8 parts by weight, based on 100 parts per weight of the acrylic polymer, which remarkably improves the weatherability of the resulting pressure-sensitive adhesive layer.

The pressure-sensitive adhesive composition according to the present invention essentially contains an epoxy-based crosslinking agent. Since epoxy-type crosslinkers have been shown to exhibit very low absorption in the UV-region below 400 nm, unlike other conventional crosslinking agents (such as aromatic isocyanate-type crosslinkers, for example), less of the UV light is absorbed by the adhesive composition as such and adhesive strength may be maintained for prolonged periods of time. Consequently, acrylic polymer compositions subjected to epoxy-based crosslinking result in pressure-sensitive adhesives with excellent resistance to weather exposure.

As the epoxy-based crosslinking agent, a species having two or more epoxy groups per molecule is preferable, 3 to 5 epoxy groups per molecule being especially preferable. For the epoxy-based crosslinking agent, solely one species or a combination of two or more species can be used. Examples of the epoxy-based crosslinking agent (polyfunctional epoxy compound), include, but are not limited to N,N,N',N'-tetraglycidyl-m-xylenediamine, diglycidyl aniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic diglycidyl ester, triglycidyl-tris(2-hydroxyethyl)isocyanurate, resorcin diglycidyl ether, and bisphenol-S-diglycidyl ether. Among the above examples, N,N,N',N'-tetraglycidyl-m-xylenediamine is particularly preferred.

The content of the epoxy-based crosslinking agent in the pressure-sensitive adhesive layer is 3 parts by weight or more, preferably 3 parts by weight or more and less than 10 parts by weight, more preferably 3 parts by weight to 9 parts by weight, such as 4 parts by weight and 9 parts per weight or less, each based on 100 parts by weight of the acrylic polymer with acrylic acid functional groups. It has been surprisingly found that the use of epoxy-based crosslinkers in the given amounts results in an unexpected improvement in weatherability.

The pressure-sensitive adhesive composition according to the present invention may contain a light stabilizer in combination with the UV-absorber described above. It has been surprisingly found that in some configurations the addition of light stabilizers may be omitted without compromising on the weatherability resistance of the resulting pressure-sensitive adhesive sheet, so that, in embodiments, it may be preferable that the pressure-sensitive adhesive composition contains light stabilizers at a content of less than 0.1 parts by weight based on 100 parts by weight of the acrylic polymer, or that the use of light stabilizers is entirely omitted, which may advantageously avoid both coloring of the resulting PSA layer and staining effects on the surface to be protected upon peel removal. In addition, it has been found that using low amounts of light stabilizers (or no light stabilizers at all), in combination with high contents of epoxy-based crosslinking agent (e.g. more than 4 pts by weight based on 100 parts by weight of the acrylic polymer) prevents unnecessary build-up of adhesive strength when the corresponding PSA sheet is applied on metal surfaces.

The term "light stabilizer" as used herein, defines compounds which act by capturing radicals generated in photo-oxidation to thereby enhance resistance of the resulting pressure-sensitive adhesive layer against light (especially, ultraviolet light) and thus differ from the UV-absorbers specified above in that they do not absorb UV radiation. The light stabilizer may be used alone or in combination of two or more kinds thereof. A preferred, but non-limiting example of a light stabilizer includes hindered amine-based light stabilizers (HALS). As examples of a HALS, a polymerized product of dimethyl succinate and 4-hydroxy-2,2,6,6-tetramethyl-1-piperidine ethanol, a reaction product of a polymerized product of dimethyl succinate and 4-hydroxy-2,2,6,6-tetramethyl-1-piperidine ethanol with N,N',N",N"'-tetrakis-(4,6-bis-(buthyl-(N-methyl-2,2,6,6-tetramethylpiperidine-4-yl)amino)-triazin-2-yl)-4,7-diazadecane-1,10-diamine, a polycondensation product of dibuthylamine-1,3-triazine-N,N'-bis(2,2,6,6-tetramethyl-4-piperidyl-1,6-hexamethylenediamine and N-(2,2,6,6-tetramethyl-4-piperidyl)butylamine, poly[{6-(1,1,3,3-tetramethylbutyl)amino-1,3,5-triazin-2,4-diyl}{2,2,6,6-tetramethyl-4-piperidyl}imino]hexamethylene{(2,6,6-tetramethyl-4-piperidyl)imino}), a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, a reaction product of decanedioic acid bis(2,2,6,6-tetramethyl-1-(octyloxy)-4-piperidinyl)ester(1,1-dimethylethylhydroperoxide) and octane, bis(1,2,2,6,6-pentamethyl-4-piperidyl)[[3,5-bis(1,1-dimethylethyl)-4-hydroxyphenyl]methyl]buthylmalonate, a reaction product of 2-aminoethanol with a reaction product of cyclohexane and N-buthyl-2,2,6,6-tetramethyl-4-piperidineamine-2,4,6-trichloro-1,3,5-triazine peroxide, and a mixture of bis(1,2,2,6,6-pentamethyl-4-piperidyl)sebacate and methyl-1,2,2,6,6-pentamethyl-4-piperidyl sebacate may be mentioned. As particularly preferred hindered amine light stabilizers from the viewpoint of a high reactivity in the adhesive composition, oligomeric hindered amine light stabilizers are mentioned, and oligomeric HALS having a number-average molecular weight Mₙ of 3100 or higher are especially preferred.

In preferred embodiments, the light stabilizer has a pK_{B} value between 5 and 9, further preferably between 6 and 9, and especially preferably between 7 and 8, which may measured by a pH-meter in methanol solution, for example. Among the series of hindered amine-based light stabilizers, those having pK_{B} values in the desired ranges may be suitably selected by the skilled artisan, for example on the basis of the substituents on the piperidine nitrogen.

If used, the content of the light stabilizer in the pressure-sensitive adhesive composition of the present invention is not particularly limited, but is preferably from 0.1 to 10 parts by weight, more preferably from 0.1 to 4 parts by weight, further preferably from 0.1 to 3 parts by weight, based on 100 parts by weight of the acrylic polymer. Contents of the light stabilizer of 0.1 part by weight or more may be preferred in view of an improved resistance towards light exposure, whereas contents of more than 10 parts by weight may result in undesired coloring effects and extensive staining upon peel removal.

Optional additives such as a crosslinking accelerator, a tackifying resin (rosin derivative, polyterpene resin, petroleum resin, and oil-soluble phenol), an antiaging agent, a filler, a colorant (dye or pigment), an antioxidant, a chain-transfer agent, a plasticizer, a softener, a surfactant and an antistatic agent may be used in the pressure-sensitive adhesive composition, if necessary, as long as the property of the present invention is not impaired. In addition, one or more silane coupling agents may be added for the purpose of improving an adhesion property to glass.

In preferred embodiments, the PSA composition according to the present invention comprises one or more antioxidants. While not being particularly limited as long as the oxidant is capable of preventing, reducing, or decreasing the rate of degradation of the adhesive composition at elevated temperatures, hindered phenols, sulfur-containing organometallic salts and/or substituted hydroquinones are mentioned as suitable examples of antioxidants. As examples of hindered phenols, ortho-substituted or 2,5-di-substituted hindered phenols in which each substituent group is a branched hydrocarbon radical having 3-20 carbon atoms, e.g., tertiary butyl or tertiary amyl and para-substituted phenols where the substitutient group is -OR, R being methyl, ethyl, 3-substituted propionic ester, etc. may be mentioned. Examples of commercially available hindered phenols include sterically hindered phenols such as IRGANOX® 1010 and IRGANOX® 1076 (commercially avaiilable from BASF). An example of a substituted hydroquinone is 2,5-di(tertiary amyl)hydroquinone. Among the sulfur-containing organometallic salts are the nickel or zinc derivatives of dibutyl thiocarbamate. The amount of antioxidant is typically between 0.1 % by weight and 5% by weight based on the total weight of the pressure-sensitive adhesive composition.

### Surface Protection Sheet

In a second embodiment, the present invention relates to a surface protection sheet comprising a carrier and a pressure-sensitive adhesive layer, wherein the pressure-sensitive adhesive layer is formed of a pressure-sensitive adhesive composition according to the first embodiment of the present invention.

The carrier used in the surface protection sheet of the present invention is not particularly limited. Exemplary materials for the preparation of the carrier include plastic materials such as polyester resins (e.g., polyethylene terephthalate (PET)), acrylic resins (e.g., polymethyl methacrylate (PMMA), polycarbonate, triacetyl cellulose (TAC), polysulfone, polyarylate, polyimide, polyvinyl chloride, polyvinyl acetate, polyethylene (PE), polypropylene (PP=, ethylene-propylene copolymer, cyclic olefin-based polymers, and a combination thereof. When aiming at combining excellent weatherability properties and transparency, polyolefin-based resins such as polyethylene (PE) (including, but not limited to high density polyethylene (HDPE), medium density polyethylene (MDPE), low density polyethylene (LDPE), linear low density polyethylene (LLDPE) and combinations thereof), and/or polypropylene (PP) are particularly preferred.

The thickness of the carrier is not particularly limited, but for example, is preferably 10 µm to 200 µm, further preferably between 15 µm and 120 µm. The carrier may be composed of a single or of multiple layers.

If the carrier forms an outermost layer of the surface protection sheet, the latter may be provided in a roll with the PSA layer in direct contact with the carrier. Alternatively, the surface protection sheet of may also comprise a release liner attached onto the PSA layer, which may be composed of suitable materials known in the art.

In the surface protection sheet according to the present invention, the pressure-sensitive adhesive layer may be in direct contact with the carrier layer or with one or more further layer(s) provided between the carrier and the PSA layer and/or on the surface of the carrier opposed to the adhesive layer. Under the aspect of simple and effective manufacturing methods, it may be preferable that the surface protection sheet consists of the carrier layer and the PSA layer, optionally with a release liner provided on the surface of the PSA layer opposed to the carrier layer.

The pressure-sensitive adhesive layer may be formed by any suitable method known in the art. Coating of the pressure-sensitive adhesive composition on the underlying layer (e.g. carrier) may be accomplished by methods known to the skilled artisan (for example, by using a coater such as a spray coater, a gravure roll coater, a reverse roll coater, a dip roll coater, a bar coater, a knife coater, a direct coater or the like).

Within the surface protection sheet, the pressure-sensitive adhesive layer preferably exhibits a thickness of 2 to 200 µm is between 2 to 40 µm, preferably between 6 to 15 µm.

In a preferred embodiment, the surface protection sheet has a weatherability resistance according to ISO 4892-2 of 1200 hours or more, further preferably 1500 hours or more, especially preferably 1800 hours or more, such as 2000 hours or more.

### Uses and Industrial Applicability

The surface protection sheet according to the present invention is preferable when used in an embodiment where it is adhered to an adherend (an article to be protected) in order for it to withstand harsh atmospheric weather conditions (such as extremely hot or cold temperatures, humidity, etc.) for a long period of time. The surface protection sheet may be applied on the article for outside storage purposes or for the actual use of the article. Thus, in a third embodiment, the present invention relates to the use of a surface protection sheet according to the second embodiment for outdoor surface protection.

Adhesion of the surface protection sheet via the pressure-sensitive adhesive layer to a substrate surface may be performed manually or mechanically (after removing of the optional release liner, if present).

The adherend is not particularly limited and includes metal plates (steel plates, stainless steel plates, aluminum plates, etc.), painted metal plates (e.g., painted steel plates used for building materials, vehicles etc.), synthetic resin plates, glass plates (e.g., windows) and coated glass plates. Particularly stable adhesion behaviour (i.e. excellent maintenance of adhesion level upon aging/after thermal treatment) is achieved on glass surfaces. Therefore, in a preferred embodiment, the surface protection sheet is used for outdoor glass surface protection.

### EXAMPLES

In the following, the present invention will be illustrated by Examples and Comparative Examples, but the present invention is not limited to the examples given below.

### Preparation of Surface Protection Sheets (Comparative Examples 1 to 12 and Examples 1 to 4)

Surface protection sheets according to Comparative Examples 1 to 12 and Examples 1 to 4 were prepared by coating different pressure-sensitive adhesive compositions onto a 75 µm thick UV-stabilized LDPE film. The detailed constitutions of the surface protection sheets are shown in TABLE 2.

The reagents used and their abbreviations are explained in the following:

### Acrylic Polymer Compositions:

**TABLE 1**

| Type | Monomer type and content (in parts by weight) | | | | | |
|---|---|---|---|---|---|---|
| | 2-ethylhexyl acrylate | ethyl acrylate | 2-hydroxyethyl acrylate | methyl methacrylate | butyl acrylate | acrylic acid |
| POL1 | 50 | 50 | 4 | - | - | - |
| POL2 | 35 | 55 | 4 | 10 | - | - |
| POL3 | 50 | - | 0.5 | - | 50 | 6 |
| POL4 | - | - | - | - | 100 | 5 |

Crosslinker: IS01: Safidur® TP 72 (isocyanate-type crosslinker, i.e. tris-(4-isocyanatophenyl) thiophosphate in ethyl acetate; commercially available from Safic-Alcan); ISO2: Coronate® L, (isocyanate-type crosslinker, i.e. modified polyisocyanate; commercially available from Tosoh Corporation); EP01: Tetrad-C (epoxy-type crosslinker, commercially available from Mitsubishi Gas Chemical Co., Inc.).

UV-absorber: Tinuvin® 326 (2-(5-chloro-2H-benzotriazole-2-yl)-6-(1,1-dimethylethyl)-4-methyl-phenol; BTZ-class UV-absorber, commercially available from BASF), Tinuvin® 400 (mixture of mixture of: 2-[4-[(2-Hydroxy-3-dodecyloxypropyl)oxy]-2-hydroxyphenyl]-4,6-bis(2,4-dimethylphenyl)-1,3,5-triazine & 2-[4-[(2-Hydroxy-3-tridecyloxypropyl)oxy]-2-hydroxyphenyl]-4,6-bis(2,4-dimethylphenyl)-1,3,5-triazine; HPT-class UV-absorber, commercially available from BASF), Tinuvin® 479 (HPT-class UV-absorber, commercially available from BASF), Tinuvin® 579 (UV-absorber, commercially available from BASF).

Light stabilizer: Tinuvin® 622 SF (Butanedioic acid dimethylester, polymer with 4-hydroxy-2,2,6,6-tetramethyl-1-piperidine ethanol; pK_{b} ∼ 7-8; Mₙ ∼ 3100-4000; oligomeric HALS-type stabilizer, commercially available from BASF).

**TABLE 2**

| | Tape composition | | | | | | Weatherability resistance (ISO 4892-2)** |
|---|---|---|---|---|---|---|---|
| | Carrier Type | Polymer Type | Crosslinker | | Additive(s) | | |
| | | | Type | Amount [phr]* | Type | Amount [phr]* | |
| Comparative Example 1 | 75 µm PE | POL1 | ISO1 | 1.2 | - | - | poor |
| | | | | | - | - | |
| Comparative Example 2 | 75 µm PE | POL1 | ISO1 | 1.2 | Tinuvin 622 | 2 | poor |
| | | | | | - | - | |
| Comparative Example 3 | 75 µm PE | POL1 | ISO1 | 1.2 | Tinuvin 326 | 2 | poor |
| | | | | | - | - | |
| Comparative Example 4 | 75 µm PE | POL1 | ISO1 | 1.2 | Tinuvin 400 | 2 | poor |
| | | | | | - | - | |
| Comparative Example 5 | 75 µm PE | POL1 | ISO1 | 1.2 | Tinuvin 479 | 2 | poor |
| | | | | | - | - | |
| Comparative Example 6 | 75 µm PE | POL1 | ISO1 | 1.2 | Tinuvin 579 | 2 | poor |
| | | | | | - | - | |
| Comparative Example 7 | 75 PE | POL1 | ISO1 | 1.2 | Tinuvin 622 | 2 | |
| | µm | | | | Tinuvin 479 | 4 | poor |
| Comparative Example 8 | 75 µm PE | POL2 | ISO1 | 1.2 | Tinuvin 622 | 2 | poor |
| | | | | | Tinuvin 479 | 4 | |
| Comparative Example 9 | 75 µm PE | POL3 | ISO1 | 1.2 | Tinuvin 622 | 2 | poor |
| | | | | | Tinuvin 479 | 4 | |
| Comparative Example 10 | 75 µm PE | POL4 | EPO1 | 2 | - | - | poor |
| | | | | | - | - | |
| Comparative Example 11 | 75 µm PE | POL4 | EPO1 | 2 | Tinuvin 622 | 2 | poor |
| | | | | | Tinuvin 479 | 4 | |
| Comparative Example 12 | 75 µm PE | POL4 | ISO2 | 4 | Tinuvin 622 | 2 | poor |
| | | | | | Tinuvin 479 | 4 | |
| Example 1 | 75 µm PE | POL4 | EPO1 | 4 | Tinuvin 622 | 2 | good |
| | | | | | Tinuvin 479 | 4 | |
| Example 2 | 75 µm PE | POL4 | EPO1 | 4 | Tinuvin 479 | 4 | good |
| | | | | | - | - | |
| Example 3 | 75 µm PE | POL3 | EPO1 | 4 | Tinuvin 479 | 4 | good |
| | | | | | - | - | |
| Example 4 | 75 µm PE | POL4 | EPO1 | 4 | Tinuvin 479 | 2 | medium |
| | | | | | - | - | |

| | | | | | | | |
|---|---|---|---|---|---|---|---|
| * parts per weight relative to 100 parts per weight of the polymer composition ** poor: < 1000 h (acc., on glass); medium: ≥ 1000 h and < 2000 h (acc., on glass); good: ≥ 2000 h (acc., on glass) | | | | | | | |

### Evaluation of the Surface Protection Sheets

The weatherability resistance of samples (given in hours) has been measured according to ISO 4892-2, using a black standard thermosensor and a radiation wavelength of 340 nm at the filter (NB UV), and the following irradiation conditions:

**TABLE 3**

| Segment 1 | Segment 2 |
|---|---|
| Light | Light |
| 102 minutes | 18 minutes |
| Irradiance: 0,5 W/m² | Irradiance: 0,5 W/m² |
| Chamber temp: 40°C | Chamber temp: 40°C |
| Relative humidity: 50% | Relative humidity: 50% |
| Rack panel temperature: 65°C | Rack panel temperature: 65°C |
| Specimen spray: off | Specimen spray: on |
| Rack spray: off | Rack spray: off |

### Results

The comparison between the performance of Examples 1 to 4 and Comparative Examples 1 to 12 in TABLE 2 shows that the surface protection sheet of the present invention exhibits superior weatherability irrespective of whether a light stabilizer is present (see Examples 1 and 2) or not (see Examples 3 and 4). On the other hand, adhesives using isocyanate crosslinkers (see Comparative Examples 1 to 9 and 12) and adhesives using epoxy-based crosslinking agents at a content of less than 3 parts per weight based on 100 parts per weight of the acrylic polymer (see Comparative Examples 10 and 11) exhibit relatively poor weatherability resistance and glass adhesion performance.

Accordingly, the surface protective sheets of the present invention are capable of withstanding long-term outside exposure without occurence of residues, staining or film tear.

Once given the above disclosure, many other features, modifications, and improvements will become apparent to the skilled artisan.

## Claims

1. Pressure-sensitive adhesive composition comprising:
an acrylic polymer with acrylic acid functional groups;
an epoxy-based crosslinking agent at a content of 3 parts per weight or more based on 100 parts per weight of the acrylic polymer; and
a UV-absorber at a content of 2 parts per weight or more based on 100 parts per weight of the acrylic polymer.

2. The pressure-sensitive adhesive composition according to claim 1, wherein the UV-absorber is comprised at a content of 3 parts per weight or more and 10 parts per weight or less, each based on 100 parts per weight of the acrylic polymer.

3. The pressure-sensitive adhesive composition according to any of claims 1 or 2, wherein the UV-absorber is selected from benzophenone derivative, benzotriazole derivatives, triazine derivatives or combinations thereof.

4. The pressure-sensitive adhesive composition according to claim 3, wherein the UV-absorber is a hydroxyphenyl-substituted benzophenone derivative.

5. The pressure-sensitive adhesive composition according to any of claims 1 to 4, wherein the epoxy-based crosslinking agent is comprised at a content of 3 parts per weight or more and 10 parts per weight or less, each based on 100 parts per weight of the acrylic polymer.

6. The pressure-sensitive adhesive composition according to claim 5, wherein the epoxy-based crosslinking agent is comprised at a content of more than 4 parts by weight and 9 parts per weight or less, each based on 100 parts per weight of the acrylic polymer.

7. The pressure-sensitive adhesive composition according to any of claims 1 to 6, wherein the epoxy-based crosslinking agent comprises two or more epoxy groups.

8. The pressure-sensitive adhesive composition according to any of claims 1 to 7, further comprising a light stabilizer at a content of 0.1 to 10 parts per weight based on 100 parts per weight of the acrylic polymer.

9. The pressure-sensitive adhesive composition according to claim 8, wherein the light stabilizer is a hindered amine light stabilizer (HALS).

10. The pressure-sensitive adhesive composition according to claim 9, wherein the light stabilizer has a pK_{B} value between 6 and 9, preferably between 7 and 8, measured by a pH-meter in methanol solution.

11. The pressure-sensitive adhesive composition according to any of claims 8 to 10, wherein the light stabilizer is an oligomeric hindered amine light stabilizer (HALS) having a number-average molecular weight Mₙ of 3100 or higher.

12. Surface protection sheet comprising a carrier and a pressure-sensitive adhesive layer, wherein the pressure-sensitive adhesive layer is formed of a pressure-sensitive adhesive composition according to any of claims 1 to 14.

13. The surface protection sheet according to claim 12, wherein the surface protection sheet has a weatherability resistance according to ISO 4892-2 of 1200 hours or more.

14. The surface protection sheet according to any of claims 12 or 13, wherein the pressure-sensitive adhesive layer thickness is between 2 to 40 µm, preferably between 6 to 15 µm.

15. Use of a surface protection sheet according to any of claims 12 to 14 for outdoor surface protection.
